# EUROPEAN PATENT APPLICATION

(11) **EP 1 827 021 A1**
(43) Date of publication of application: **29.08.2007**
(21) Application number: 05819515.7
(22) Date of filing: 22.12.2005
(51) Int. Cl.: H04N 7/173, H04N 5/765

(54) **DIGITAL BROADCAST RECORDING/REPRODUCTION DEVICE**

(30) Priority: 24.12.2004 JP 2004373812
(71) Applicant: MATSUSHITA ELECTRIC INDUSTRIAL CO., LTD., Osaka 571-8501 (JP)
(72) Inventor: NISHI, Tatsuya c/o Matsushita El. Ind. Co., Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/023632
(87) International publication number: WO 2006/068238

(57) **Abstract**

There is disclosed a digital broadcast recording/reproduction device capable of reproducing a recorded content acquired from a broadcast wave and reproducing a content which can be acquired via a communication during acquisition of the content. In this device, a broadcast wave including a data broadcast content is separated into video, audio, and a data broadcast content by multiplexing separation unit (105). A control unit (102) decides whether the separated data broadcast content includes anchor information on the content-via-communication acquired via the communication. When the data broadcast content includes the anchor information, a communication unit (117) acquires the content-via-communication according to the anchor information. The content-via-communication acquired by the communication unit (117) is correlated with the anchor information and accumulated in a data accumulation unit (109) by a recording/reproduction unit (108).

## Description

### Technical Field

The present invention relates to a digital broadcast recording and playback apparatus.

### Background Art

In BS digital broadcasting and digital terrestrial broadcasting, image information and audio information can be contained in a broadcast wave, and, in addition, BML (Broadcast Markup Language) content and monomedia can be contained in the broadcast wave as data broadcasting.

If a receiving apparatus such as television which receives BML and monomedia has an Internet connection environment, by following URI (Uniform Resource Identifier) described in the BML as anchor information, for example, the receiving apparatus can access the content on the Internet.

As such a receiving apparatus which receives digital broadcasting, an apparatus having a recording function is also known, and the technique is disclosed in Patent Document 1, for example. According to the digital broadcast recording and playback apparatus disclosed in Patent Document 1, when digital broadcasting using transport streams of an MPEG scheme that transmit content using a data carousel scheme is recorded, data packets and image/audio stream of data broadcasting are separately recorded, and a transmission completion time of the data packets is added to the data packets as a time stamp at which synchronization with image/audio stream is possible. By this means, it is possible to record data packets without overlapping and play back the data packets at a specified time in synchronization with image/audio streams.

In recent years, small mobile terminals such as mobile telephones allowing the user to watch and record television broadcasting have been widely spread. With such small mobile terminals, there is a plan in digital terrestrial broadcasting for dividing the band of one channel (6 MHz) into thirteen segments, allocating one (segment) of them, and providing service using the allocated band. This data broadcast service is referred to as partial reception broadcasting. The amount of information transmitted in one segment is extremely small, and therefore it is assumed that the content linked with the received data broadcasting is also accessed from small mobile terminals.
Patent Document 1 : Japanese Patent Application Laid-Open No.2002-152688

### Disclosure of Invention

### Problems to be Solved by the Invention

However, the digital broadcast recording and playback apparatus disclosed in Patent Document 1 cannot record content acquired through communication such as the Internet. For example, even though data broadcast content contained in the broadcast wave is recorded, if the recorded content is played back after a long period of time such as six months later or one year later and the content is tried to be acquired through communication during the playback, the content is likely to have already been deleted from the server or updated. In this case, the desired content cannot be acquired.

It is therefore an object of the present invention to provide a digital broadcast recording and playback apparatus capable of playing back content which can be acquired through communication upon acquiring recorded content even in playback of the recorded content acquired from a broadcast wave.

### Means for Solving the Problems

The digital broadcast recording and playback apparatus of the present invention adopts a configuration including: a reception section that receives a broadcast wave containing data broadcast content; an analysis section that analyzes whether or not the data broadcast content received by the reception section contains anchor information of communication content acquired through communication; a communication content acquiring section that, when an analysis result of the analysis section indicates that the data broadcast content contains the anchor information, acquires the communication content based on the anchor information; and an accumulating section that accumulates the communication content acquired by the communication content acquiring section in association with the anchor information.

According to this configuration, by acquiring content through communication based on the anchor information contained in the data broadcast content received from a broadcast wave and accumulating the acquired content in association with the anchor information, it is possible to play back content acquired through communication (hereinafter referred to as "communication content") indicated by the anchor information without involving communication upon playback of the accumulated broadcast content.

### Advantageous Effect of the Invention

According to the present invention, even in playback of the recorded content acquired from a broadcast wave, it is possible to play back content which can be acquired through communication upon acquiring the recorded content.

### Brief Description of Drawings

FIG.1 explains definition of content according to an embodiment of the present invention;
FIG.2 is a block diagram showing a configuration of a digital broadcast recording and playback apparatus according to an embodiment of the present invention;
FIG.3 is a block diagram showing the internal configuration of the control section shown in FIG.2;
FIG.4 is a flowchart showing procedure of recording processing of the digital broadcast recording and playback apparatus shown in FIG.2;
FIG.5 is a flowchart showing detailed procedure of the content analysis acquiring processing shown in FIG.4; and
FIG.6 is a flowchart showing procedure of playback processing of the digital broadcast recording and playback apparatus shown in FIG.2.

### Best Mode for Carrying Out the Invention

An embodiment of the present invention will now be described in detail with reference to the accompanying drawings.

### (Embodiment)

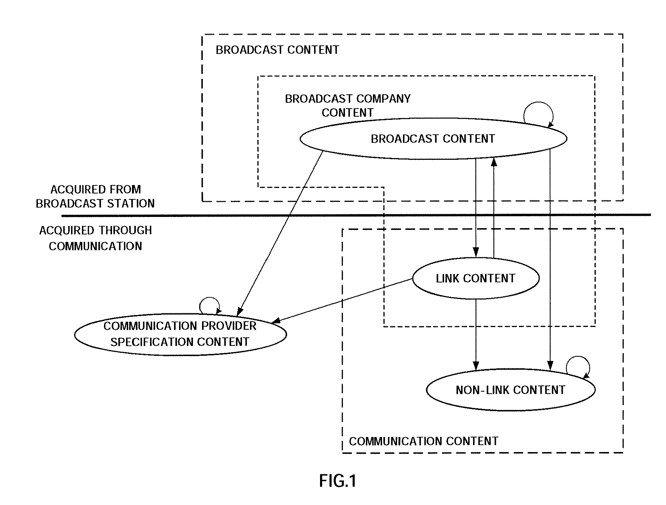

Content according to an embodiment of the present invention will be defined using FIG. 1. "Content" includes broadcast content, link content, non-link content and communication provider specification content. Anchor information refers to information for shifting from the content being played back to the next content and is shown by the arrow in FIG. 1 which connects contents. By using anchor information, it is possible to shift from broadcast content to link content, non-link content and communication provider specification content, for example. Each content is distinguished by a URI. If the beginning of URI of anchor information is "http:", the content is broadcast company content.

Broadcast content includes image, audio and data broadcast content acquired from a broadcast wave. Link content is described assuming that the receiving apparatus in compliance with the data broadcast specification presents content in a link state. Broadcast content and link content are collectively referred to as broadcast company content. In addition, a link state refers to a state where the receiving apparatus can receive and play back BML content on the bidirectional web server managed by the broadcast station and the broadcast resources of the image and audio. More specifically, a link state refers to a state where the broadcast company content is played back.

Further, non-link content is described assuming that the receiving apparatus in compliance with the data broadcast specification presents the content using the data broadcast browser. Link content and non-link content are collectively referred to as communication content and indicate the BML content posted on the bidirectional web server. In addition, as compared with the above-described link state, non-link state refers to the state where the receiving apparatus can receive and play back communication content alone, and cannot refer to the broadcast resources of the image and audio. More specifically, a state where the content other than the broadcast company content is played back.

Communication provider specification content is described based on the specification provided by the communication provider, posted on the bidirectional web server, and provided through Internet-access service using the mobile telephone network typified by i-mode (registered trademark).

Broadcast content is acquired from a broadcast wave. Link content, non-link content and broadcast company specification content are acquired through communication such as the Internet, and therefore will be referred to as "communication content."

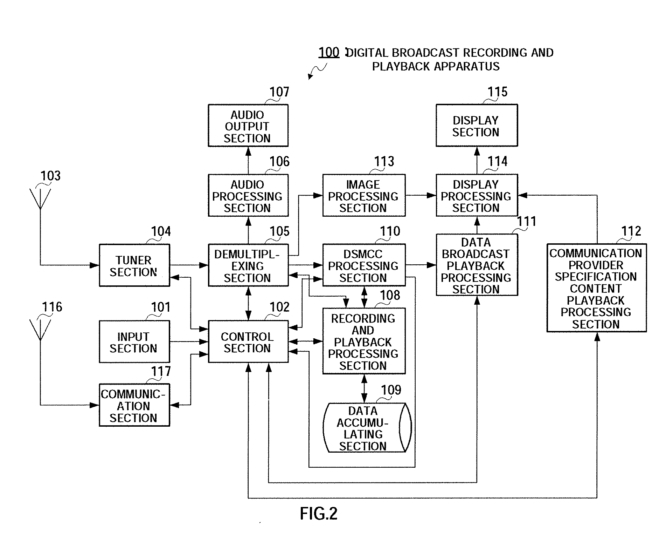

FIG.2 is a block diagram showing a configuration of digital broadcast recording and playback apparatus 100 according to an embodiment of the present invention. In this figure, input section 101 has button keys or the like, and a user operates the button keys and inputs instructions such as playback, recording and channel selection to control section 102.

Control section 102 receives the instructions from input section 101, controls the sections inside digital broadcast recording and playback apparatus 100 and thereby performs playback, recording and channel selection. Details of control section 102 will be described later.

Tuner section 104 extracts a frequency signal of the channel specified by the user from the broadcast wave received via broadcast antenna 103 and performs code demodulation processing on the extracted frequency signal. The signal subjected to code demodulation processing is outputted to demultiplexing section 105 and control section 102.

Demultiplexing section 105 receives a request for playing back received content from control section 102 and demultiplexes the signal outputted from tuner section 104 to image information, audio information, data broadcast content, and the like. When receiving the request for playing back recorded content from control section 102, demultiplexing section 105 acquires recorded content via recording and playback processing section 108 (described later) and demultiplexes the acquired content to image information, audio information, data broadcast content, and the like. Thedemultiplexed image information, audio information and data broadcast content are outputted to image processing section 113, audio processing section 106 and DSMCC processing section 110, respectively. Further, when receiving a recording request from control section 102, demultiplexing section 105 does not demultiplex the signal outputted from tuner section 104 and outputs the signal to recording and playback processing section 108 in a transport stream state. In addition, tuner section 104 and demultiplexing section 105 function as a receiving means.

Audio processing section 106 decodes the audio stream which is outputted from demultiplexing section 105 and encoded using AAC (Advanced Audio Coding) or the like, and outputs the decoded signal to audio output section 107. Audio output section 107 outputs the audio outputted from audio processing section 106.

Recording and playback processing section 108 receives a recording request from control section 102, acquires the transport stream outputted from demultiplexing section 105, and accumulates the acquired transport stream in data accumulating section 109. Further, when receiving a request for playing back recorded content from control section 102, recording and playback processing section 108 reads out the accumulated transport stream from data accumulating section 109 and outputs the read-out transport stream to demultiplexing section 105.

Data accumulating section 109 is a nonvolatile memory or removable nonvolatile memory. A transport stream is accumulated in data accumulating section 109 by recording and playback processing section 108, and the accumulated transport stream is read out from data accumulating section 109.

DSMCC (Digital Storage Media Command and Control) processing section 110 acquires a module (a unit configuring data carousel) of data broadcasting transmitted using a data carousel scheme which is a scheme of repeatedly transmitting data, from demultiplexing section 105 and constructs data broadcast content from the acquired module. The constructed data broadcast content is outputted to data broadcast playback processing section 111. Further, DSMCC processing section 110 acquires data relating to data broadcast from demultiplexing section 105, analyzes the acquired data broadcast content and thereby receives report such as an event message and updating of the module, and reports the event message and the update to control section 102, recording and playback processing section 108 and data broadcast playback processing section 111. In addition, the event message is transmitted from the broadcast station to multimedia content operating in digital broadcast recording and playback apparatus 100 immediately or singly at a specified time.

Data broadcast playback processing section 111 is a broadcast content display browser that displays BML, and, when receiving a request for playing back data broadcast from control section 102, plays back the data broadcast content outputted from DSMCC processing section 110 and outputs the played-back content to display processing section 114. Further, when playing back or stopping data broadcast content, data broadcast playback processing section 111 issues an operation confirmation report to control section 102.

Communication provider specification content playback processing section 112 is a browser implemented based on the specification provided by the communication provider (for example, i-mode (registered trademark) browser), and, when receiving a request for playing back communication provider specification content from control section 102, plays back HTML content or the content specified by the communication provider outputted from control section 102 and outputs the played-back content to display processing section 114. Further, when playing back or stopping communication provider specification content, communication provider specification content playback processing section 112 issues an operation confirmation report to control section 102.

Image processing section 113 decodes the image stream that is outputted from demultiplexing section 105 and encoded using H.264 (officially, H.264/AVC (Advanced Video Coding)) which is an advanced dynamic image compression scheme, and outputs the decoded signal to display processing section 114.

Display processing section 114 combines the image stream decoded at image processing section 113 and the content outputted from data broadcast playback processing section 111 and communication provider specification content playback processing section 112 and outputs the combined information to display section 115. Display section 115 displays the information outputted from display processing section 114.

When receiving a request for acquiring communication content from control section 102, communication section 117 as a communication content acquiring section connects to communication network via communication antenna 116, acquires communication content by carrying out bidirectional communication and outputs the acquired communication content to control section 102.

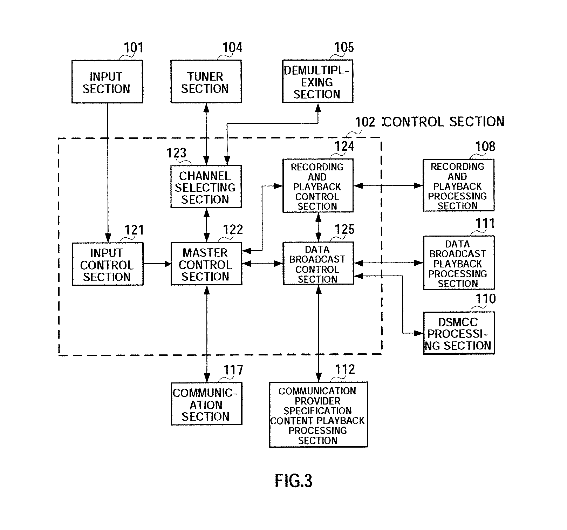

FIG.3 is a block diagram showing the internal configuration of control section 102 shown in FIG.2. In this figure, input control section 121 converts an instruction from input section 101 to request information such as a playback request, recording request and channel selection request, and outputs this request information to master control section 122.

Master control section 122 controls channel selecting section 123, recording and playback control section 124, data broadcast control section 125 and communication section 117 based on the request information outputted from input control section 121.

Channel selecting section 123 is controlled by master control section 122, sets a frequency channel of tuner section 104, and, when there is a broadcast wave (transport stream) that can be received in the set frequency channel, recognizes that the frequency channel selection is successful, and makes tuner section 104 output the transport stream as is to demultiplexing section 105. Further, channel selecting section 123 analyzes the data demultiplexed at demultiplexing section 105 and sets demultiplexing section 105 so as to extract stream such as image and audio of the specified service in the transport streambasedon the service configuration of the transport stream obtained through the analysis.

Recording and playback control section 124 is controlled by master control section 122, creates a URI directory, extracts a file name necessary for recording from the URI, adds the extracted file name to the acquired content as a recording file name, and outputs the content to recording and playback processing section 108. Further, recording and playback control section 124 receives an operation confirmation report such as recording start, recording stop and that recording is not possible due to lack of recording possible area (free space) of data accumulating section 109, and outputs the operation confirmation report to master control section 122.

Data broadcast control section 125 is controlled by master control section 122 and performs data broadcast playback control. Specifically, the following processing is carried out. Data broadcast control section 125 makes DSMCC processing section 110 operate and construct data broadcast content, and acquires the constructed data broadcast content from DSMCC processing section 110. Further, data broadcast control section 125 acquires data broadcast content from communication section 117. Data broadcast control section 125 analyzes the acquired data broadcast content and reports the analysis result to recording and playback control section 124. In addition, DSMCC processing section 110 and data broadcast control section 125 also function as an analysis means.

Further, data broadcast control section 125 instructs data broadcast playback processing section 111 to play back or stop data broadcast content, makes data broadcast playback processing section 111 play back or stop data broadcast content, and acquires an operation confirmation report from data broadcast playback processing section 111.

Further, when content shifts to communication content, data broadcast control section 125 acquires communication content and determines the type of the acquired content based on the extension of the file name. Data broadcast content having the extension ".bml" is outputted to data broadcast playback processing section 111, and communication provider specification content having the extension "html" is outputted to communication provider specification content playback processing section 112. That is, data broadcast control section 125 exclusively switches the operation between data broadcast playback processing section 111 and communication provider specification content playback processing section 112 according to the type of communication content.

In addition, data broadcast control section 125 analyzes whether or not broadcast content contains anchor information, and acquires content based on the anchor information if the anchor information is contained. Data broadcast control section 125 instructs recording and playback control section 124 to accumulate the acquired content in data accumulating section 109.

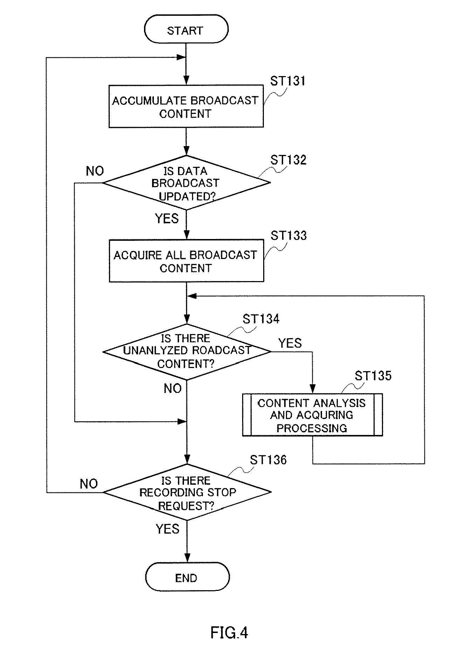

Next, the procedure of recording processing of digital broadcast recording and playback apparatus 100 shown in FIG.2 will be described using FIG.4. In FIG.4, in step (hereinafter abbreviated to "ST") 131, data accumulating section 109 accumulates broadcast content. At this time, although there are several possible recording schemes including the scheme of recording data broadcast content alone and the scheme of recording image/audio and the data broadcast content at the same time, any scheme is possible if content is recorded using a scheme which allows content to be played back from the specified position and time.

In ST132, DSMCC processing section 110 determines whether or not data broadcast content is updated, including addition, change and deletion. When data broadcast content is determined to be updated ("Yes"), the flow proceeds to ST133, and, when data broadcast content is determined not to be updated ("No"), the flow proceeds to ST136. Here, the updating of data broadcast content includes program start and end and data broadcasting start and end.

In ST133, data broadcast control section 125 acquires all broadcast content which is currently broadcasted, and, in ST134, data broadcast control section 125 determines whether or not there is content which is not yet analyzed regarding the presence of anchor information. If it is determined that there is content which is not yet analyzed ("Yes"), the flow proceeds to ST135, and, if it is determined that there is no content which is not yet analyzed ("No"), the flow proceeds to ST136.

In ST135, DSMCC processing section 110 analyzes whether or not unanalyzed content contains anchor information, acquires communication content based on the anchor information if the anchor information is contained, and the flow returns to ST134. In addition, the processing in ST135 is referred to as content analysis acquiring processing, and the detailed procedure will be described later.

In ST136, master control section 122 determines whether or not there is a recording stop request by input operation of the user or a recording stop request by the system due to a decrease in battery power. If it is determined that there is a recording stop request ("Yes"), the recording processing of digital broadcast recording and playback apparatus 100 is finished, and, if it is determined that there is no recording stop request ("No"), the flow returns to ST131.

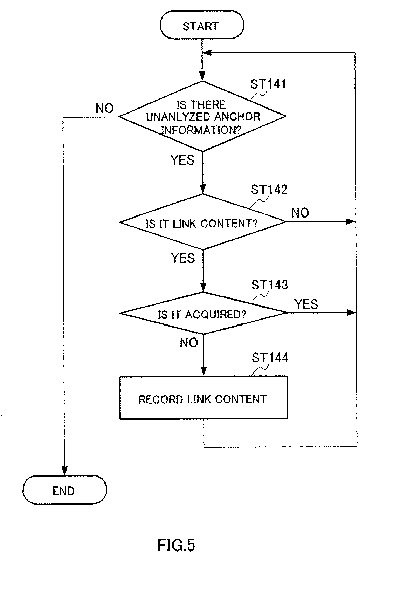

Next, the detailed procedure of the content analysis acquiring processing shown in ST135 of FIG.4 will be described using FIG.5. In FIG.5, in ST141, data broadcast control section 125 determines whether or not unanalyzed broadcast content and communication content contain anchor information. If anchor information is determined to be contained ("Yes"), the flow proceeds to ST142, and, if anchor information is determined not to be contained ("No"), the content analysis acquiring processing is finished.

In ST142, data broadcast control section 125 determines whether or not the anchor information contained in broadcast content and communication content indicates link content. If anchor information is determined to indicate link content ("Yes"), the flow proceeds to ST143, and, if anchor information is determined not to indicate link content ("No"), the flow returns to ST141.

In ST143, recording and playback processing section 108 confirms whether or not the link content indicated by the anchor information is already accumulated in data accumulating section 109, that is, whether or not link content is already acquired. If link content is already acquired ("Yes"), the flow returns to ST141, and, if link content is not acquired ("No"), the flow proceeds to ST144. In addition, also when link content is already acquired, content may be acquired through communication, and it may be confirmed whether or not there is a change in the acquired content from the already acquired content (content accumulated in data accumulating section 109). If there is no change, content is determined to be already acquired ("Yes"), and the flowmay return to ST141, and, if there is a change, content is determined to be not yet acquired ("No"), and the flow may proceed to ST144.

In ST144, recording and playback processing section 108 acquires link content which is not accumulated in data accumulating section 109 and a file name indicating the link content through communication. The acquired link content and the file name are recorded in data accumulating section 109, and the flow returns to ST141. As for the recording format, a directory is created in URI units, and the link content and the file name are recorded in the created directory.

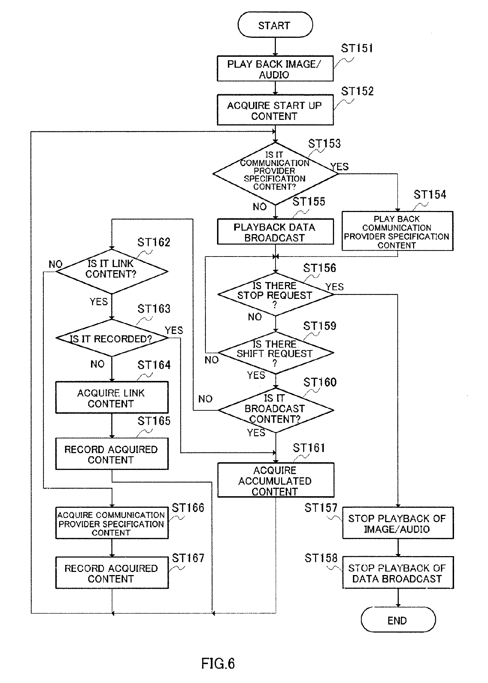

Next, the procedure of playback processing of digital broadcast recording and playback apparatus 100 shown in FIG.2 will be described using FIG.6. In FIG.6, in ST151, recording and playback processing section 108 reads out the accumulated transport stream from data accumulating section 109, and demultiplexing section 105 demultiplexes the read-out transport stream. Image processing section 113 and audio processing section 106 process the demultiplexed image information and demultiplexed audio information, respectively, and play back the image and audio.

In ST152, data broadcast control section 125 acquires a first page (start-up content) out of the data broadcast content contained in the transport stream played back in ST151.

In ST153, data broadcast control section 125 determines whether or not the start-up content acquired in ST152--the content for which a playback request is received--is communication provider specification content. If the start-up content is determined to be communication provider specification content ("Yes"), the flow proceeds to ST154, and, if the start-up content is determined not to be communication provider specification content ("No"), the flow proceeds to ST155.

In ST154, the content for which the playback request is received is determined to be communication provider specification content in ST153, and therefore communication provider specification content playback processing section 112 plays back the content.

In ST155, the content for which the playback request is received is determined not to be communication provider specification content in ST153, and therefore data broadcast playback processing section 111 plays back the content.

In ST156, master control section 122 determines whether or not there is a playback stop request by input operation of the user or a playback stop request by the system due to a decrease in battery power. If it is determined that there is a playback stop request ("Yes"), the flow proceeds to ST157, and, if it is determined that there is no playback stop request ("No"), the flow proceeds to ST159.

In ST157, recording and playback processing section 108 stops the reading of transport stream from data accumulating section 109 and thereby stops the playback of image and audio. In ST158, data broadcast control section 125 stops the playback of data broadcast and finishes the playback processing of digital broadcast recording and playback apparatus 100.

In ST159, data broadcast control section 125 confirms whether there is a shift request to the content indicated by anchor information. In addition, a shift request is generated by input operation of the user or timer operation within content. When there is a shift request ("Yes"), the flow proceeds to ST160, and, when there is no shift request ("No"), the flow returns to ST156.

In ST160, data broadcast control section 125 determines whether or not the content for which the shift request is received is broadcast content. If the content is determined to be broadcast content ("Yes"), the flow proceeds to ST161, and, if the content is determined not to be broadcast content ("No"), the flowproceeds to ST162.

In ST161, recording and playback processing section 108 acquires the broadcast content for which the shift request is received, from data accumulating section 109, and the flow returns to ST153.

In ST162, data broadcast control section 125 determines whether or not the content for which the shift request is received is link content. If the content is determined to be link content ("Yes"), the flow proceeds to ST163, and, if the content is determined not to be link content ("No"), the flow proceeds to ST166.

In ST163, recording and playback processing section 108 confirms whether or not the link content for which the shift request is received is already recorded in data accumulating section 109. If link content is already recorded ("Yes"), the flow proceeds to ST161, and, if link content is not recorded ("No"), the flow proceeds to ST164.

In ST164, the link content for which the shift request is received is not recorded in data accumulating section 109, and therefore master control section 122 acquires the link content via communication section 117. In ST165, recording and playback processing section 108 records the link content acquired in ST164 in data accumulating section 109, and the flow returns to ST153.

In ST166, the content for which the shift request is received is communication provider specification content, and therefore master control section 122 acquires communication provider specification content via communication section 117. In ST167, recording and playbackprocessingsection108recordsthecommunication provider specification content acquired in ST166 in data accumulating section 109, and the flow returns to ST153.

In this way, according to this embodiment, by acquiring content through communication based on anchor information contained in data broadcast content received from a broadcast wave and recording the acquired content in association with broadcast content, it is possible to play back communication content indicated by the anchor information without involving communication when recorded broadcast content is played back.

This concludes the description of embodiments of the present invention.

The digital broadcast recording and playback apparatus of the present invention adopts a configuration including: a reception section that receives a broadcast wave containing data broadcast content; an analysis section that analyzes whether or not the data broadcast content received by the reception section contains anchor information of communication content acquired through communication; a communication content acquiring section that, when an analysis result of the analysis section indicates that the data broadcast content contains the anchor information, acquires the communication content based on the anchor information; and an accumulating section that accumulates the communication content acquired by the communication content acquiring section in association with the anchor information.

According to this configuration, by acquiring content through communication based on anchor information contained in data broadcast content received from a broadcast wave and accumulating the acquired content in association with the anchor information, it is possible to play back communication content indicated by the anchor information without involving communication when accumulated broadcast content is played back.

A second aspect of the present invention is the digital broadcast recording and playback apparatus in the above aspect wherein, when the analysis result of the analysis section indicates that the data broadcast content is updated, the communication content acquiring section acquires the communication content based on new anchor information contained in the updated data broadcast content.

According to this configuration, although data broadcast content is generally transmitted using a data carousel scheme, and consequently the same data is repeatedly received, when data broadcast content is updated, by acquiring communication content based on new anchor information, it is possible to avoid repeatedly acquiring communication content from the same anchor information and efficiently acquire communication content which is not yet acquired.

A third aspect of the present invention is the digital broadcast recording and playback apparatus in the above-described aspects, wherein, when the acquired communication content further contains anchor information, the communication content acquiring section acquires the communication content based on the anchor information.

According to this configuration, as long as anchor information is contained in the acquired communication content, it is possible to keep acquiring communication content.

A fourth aspect of the present invention is the digital broadcast recording and playback apparatus in the above-described aspects, wherein the communication content acquiring section acquires the communication content on condition that the content identification information which is contained in the anchor information and identifies the content, indicates the link content.

According to this configuration, when the anchor information contained in the acquired communication content is link content, by acquiring the link content, it is possible to restrict to infinitely acquire content.

A fifth aspect of the present invention is the digital broadcast recording and playback apparatus in the above-described aspects further including a recording and playback processing section that plays back broadcast content accumulated in the accumulating section, and that, when the broadcast content being played back shifts to the communication content, plays back the communication content accumulated in the accumulating section.

According to this configuration, when accumulated broadcast content shifts to communication content during playback, it is possible to play back the communication content even when the communication content indicated by anchor information is deleted from the server or updated, or the apparatus is located outside the communication area such as in tunnel and underground.

A sixth aspect of the present invention is the digital broadcast recording and playback apparatus in the above-described aspects, wherein, when the communication content accumulated in the accumulating section cannot be played back, the recording and playback processing section acquires the communication content via the communication content acquiring section, plays back the communication content and accumulates the acquired communication content in the accumulating section.

According to this configuration, when accumulated communication content cannot be played back, by acquiring content through communication, playing back the acquired communication content and accumulating the communication content, it is possible to avoid acquiring content through communication when the accumulated communication content is played back next time.

The present application is based on Japanese Patent Application No.2004-373812, filed on December 24, 2004, the entire content of which is expressly incorporated herein by reference.

### Industrial Applicability

The digital broadcast recording and playback apparatus according to the present invention provides an advantage of playing back content which can be acquired through communication upon acquiring recorded content even in playback of the recorded content acquired from a broadcast wave, and can be applied to small mobile terminals such as mobile telephones.

## Claims

1. A digital broadcast recording and playback apparatus comprising:
a reception section that receives a broadcast wave containing data broadcast content;
an analysis section that analyzes whether or not the data broadcast content received by the reception section contains anchor information of communication content acquired through communication;
a communication content acquiring section that, when an analysis result of the analysis section indicates that the data broadcast content contains the anchor information, acquires the communication content based on the anchor information; and
an accumulating section that accumulates the communication content acquired by the communication content acquiring section in association with the anchor information.

2. The digital broadcast recording and playback apparatus according to claim 1, wherein, when the analysis result of the analysis section indicates that the data broadcast content is updated, the communication content acquiring section acquires the communication content based on new anchor information contained in updated data broadcast content.

3. The digital broadcast recording and playback apparatus according to claim 1, wherein, when the acquired communication content further contains anchor information, the communication content acquiring section acquires the communication content based on the anchor information.

4. The digital broadcast recording and playback apparatus according to claim 3, wherein the communication content acquiring section acquires the communication content on condition that content identification information which is contained in the anchor information and identifies content, indicates link content.

5. The digital broadcast recording and playback apparatus according to claim 1, further comprising a recording and playback processing section that plays back the broadcast content accumulated in the accumulating section, and that, when the broadcast content being played back shifts to the communication content, plays back the communication content accumulated in the accumulating section.

6. The digital broadcast recording and playback apparatus according to claim 1, wherein, when the communication content accumulated in the accumulating section cannot be played back, the recording and playback processing section acquires the communication content via the communication content acquiring section, plays back the acquired communication content and accumulates the communication content in the accumulating section.

## Amended claims

### Amended claims under Art. 19.1 PCT

**1.** (Amended) A digital broadcast recording and playback apparatus comprising:
a reception section that receives a broadcast wave containing data broadcast content;
an analysis section that analyzes whether or not anchor information of communication content acquired through communication is contained in the data broadcast content received by the reception section;
a communication content acquiring section that, when an analysis result of the analysis section indicates that the data broadcast content contains the anchor information of the communication content acquired through communication, acquires the communication content based on the anchor information; and
an accumulating section that accumulates the broadcast content contained in the broadcast wave received by the reception section and accumulates the communication content acquired by the communication content acquiring section in association with the anchor information.

**2.** The digital broadcast recording and playback apparatus according to claim 1, wherein, when the analysis result of the analysis section indicates that the data broadcast content is updated, the communication content acquiring section acquires the communication content based on new anchor information contained in updated data broadcast content.

**3.** The digital broadcast recording and playback apparatus according to claim 1, wherein, when the acquired communication content further contains anchor information, the communication content acquiring section acquires the communication content based on the anchor information.

**4.** The digital broadcast recording and playback apparatus according to claim 3, wherein the communication content acquiring section acquires the communication content on condition that content identification information which is contained in the anchor information and identifies content, indicates link content.

**5.** The digital broadcast recording and playback apparatus according to claim 1, further comprising a recording and playback processing section that plays back the broadcast content accumulated in the accumulating section, and that, when the broadcast content being played back shifts to the communication content, plays back the communication content accumulated in the accumulating section.

**6.** (Amended) The digital broadcast recording and playback apparatus according to claim 5, wherein, when the communication content accumulated in the accumulating section cannot be played back, the recording and playback processing section acquires the communication content via the communication content acquiring section, plays back the acquired communication content and accumulates the communication content in the accumulating section.
